# EUROPEAN PATENT APPLICATION

(11) **EP 2 083 496 A2**
(43) Date of publication of application: **29.07.2009**
(21) Application number: 09001025.7
(22) Date of filing: 26.01.2009
(51) Int. Cl.: H02J 7/02

(54) **Charging system**

(30) Priority: 28.01.2008 EP 08150734
(71) Applicant: TEXAS INSTRUMENTS DEUTSCHLAND GMBH, 85356 Freising (DE)
(72) Inventor: Gehrke, Dirk, 85354 Freising (DE); Scibilia, Roberto, 85356 Freising (DE)
(74) Representative: Prinz & Partner

(57) **Abstract**

A mobile electronic device includes circuitry for contactless charging. The circuitry comprises an inductor (L2) for contactlessly receiving power and supplying the power to the mobile electronic device. A control stage (CNTL) coupled to the inductor (L2) and is adapted to control a supply of power received by the inductor (L2) to the load to regulate a load current such that a supply voltage (VOUT) is maintained above a predetermined level.

## Description

### FIELD OF THE INVENTION

The present invention generally relates to a charging system and, more particularly, to a mobile electronic device including charging circuitry.

### BACKGROUND

Contactless charging systems are widely used to charge mobile devices. In such systems, no cable is required to connect the device to the adapter used to supply power to the charging circuitry in the device. Instead, an induction coil in a charging cradle or docking station transmits power to an induction coil in the mobile device when the device is held in the charging cradle. The power received at the induction coil in the device is then used to charge the battery or power supply in the device. Such charging systems suffer from problems with reliability, however, for example if the mobile phone is not lined up or positioned in the charging cradle correctly. Conventional charging mechanisms in the mobile device cease charging if the received power drops below a threshold value. Therefore, the circuitry for generating and controlling the energy in the charging cradle is complex.

### SUMMARY

Accordingly, the invention provides a mobile electronic device including circuitry for contactless charging. The circuitry comprises an inductor for contactlessly receiving power and supplying the power to a mobile electronic device. A control stage is coupled to the inductor, which is adapted to control a supply of power received by the inductor to the load and to regulate a load current such that a supply voltage is maintained above a predetermined level. The inductor is able to receive power without contacting any power source so that a current is then induced in the inductor. This is supplied as a load current to power the load (the mobile device). The supply voltage is monitored by the control stage and, if the supply voltage drops below a set predetermined value, the control stage adjusts the load current accordingly so that the supply voltage stays above the predetermined value. The inductor is advantageously implemented as a coil. The invention provides a simple, efficient device, which has a low cost, allows for dynamic adaptive charging and is independent and self-sustainable.

The inductor (e.g. coil, induction coil) may simply be provided on a printed circuit board as part of the existing charging circuit. The relative position of receiving and transmitting coil (inductor) is less relevant and contactless charging and powering is more efficient.

The device may further comprise a battery coupled to the control stage. The control stage can then be adapted to control the battery to supply power to the load when the load requires more power than the inductor can supply. The control stage monitors the power received at the inductor and if the power received at the inductor is insufficient to power the load, power is also supplied to the load from the battery so that the battery provides the additional energy to power the load. An amount of power supplied to the load by the battery is controlled by the control stage in accordance with the amount of received power at the inductor. This allows for adaptive dynamic load support dependent on the current demanded by the load.

Advantageously, the control stage is further adapted to control a supply of power received by the inductor to dynamically charge the battery when the inductor is supplying more power than is required by the load. If there is more energy coming from the inductor than that needed to power the load, the battery charging current can be dynamically adapted using the control stage to control the amount of power received at the inductor to charge the battery. In other words, the excess power received by the inductor that is not used to power the load can be used to charge the battery. In this way, a very efficient use of power can be achieved, since the system is independent and self-sustainable and power received by the inductor is not wasted.

In an advantageous embodiment, the device may further comprise a rectification stage coupled between the inductor and the control stage for rectifying a voltage signal from the inductor to be supplied to the load. The rectification stage can provide a full wave rectification of the voltage signal received at the inductor, which means that the inductor does not need to be in a specific configuration to receive power. In other words, the windings on the inductor do not have to be lined up with those on a docking station or charging cradle in a specific manner since, as there is a full wave rectification of the voltage signal, a current will always be induced in the inductor independently of its position. Furthermore, if the inductor is provided on a printed circuit board, the position of the printed circuit board in the device is irrelevant.

The invention also provides a charging system for contactlessly charging a mobile electronic device. The system comprises a power generating module including a first inductor for transmitting power, a capacitor coupled to the first inductor in a resonant configuration, and a switch for coupling the first inductor and the capacitor to a power supply. A power receiving module includes circuitry for charging the mobile electronic device. The circuitry comprises a second inductor for contactlessly receiving power from the first inductor. The second inductor is adapted to supply the received power to the mobile electronic device. A control stage is coupled to the inductor. Further, the switch is implemented by a MOSFET coupled in a flyback-controlled configuration and is adapted to be switched when a drain voltage of the MOSFET is zero, and the control stage is adapted to control a supply of power received by the second inductor to the mobile electronic device to regulate a load current such that a supply voltage is maintained above a predetermined level.

In the power generating module the switch can be adapted to be switched in a flyback-controlled manner such that when the switch is closed (ON) a voltage is applied to the first inductor. This way energy is stored in the first inductor. Then, when the switch is opened (during the "OFF" time) a half-wave resonant waveform is present on the drain of the MOSFET implementing the switch. In other words, the first inductor, capacitor and switch are in a "resonant flyback converter" configuration. The MOSFET can be switched with zero voltage at its drain. Therefore no di/dt spikes occur and thus there is almost no radiative electromagnetic interference. Furthermore, the number of circuit components in the power generating module may be kept to a minimum, which means that the device can have an extremely low cost. If the first inductor in the power generating module is close to the second inductor in the power receiving module, energy from the first inductor is transferred to the second inductor. In other words, the changing magnetic field in the first inductor induces a current to flow in the second inductor. The first and second inductors may then be coupled so as to create a "flyback" transformer and energy from the power generating module is transferred to the power receiving module during the OFF time. No forward current is coupled because the forward voltage may always be less than the flyback voltage. Thus energy is stored in the air gap between the first and second inductors.

The first and second inductors (e.g. coils) may be embedded on printed circuit boards (PCBs) and it is also possible to provide each inductor on a multilayer PCB with multiple embedded windings per layer. In this way, efficiency of the device is increased and it is possible to shrink the form factor.

The invention further provides a method of contactlessly supplying power to a load. The method comprises contactlessly receiving power and supplying the received power to the load. Further, the method comprises controlling a supply of power to the load so as to regulate a load current such that a supply voltage is maintained above a predetermined level. Therefore the method of the present invention allows the power to the load (e.g. a mobile device) to be dynamically adapted, which provides for a high efficiency.

### BRIEF DESCRIPTION OF THE DRAWINGS

Further advantages and characteristics of the invention ensue from the description below of the preferred embodiments, with reference to the accompanying drawings, in which:
FIG. 1 is a simplified circuit diagram of a power generating module for a charging system according to one embodiment of the invention;
FIG. 2 is a simplified diagram of a waveform of a voltage in the power generating module;
FIG. 3 is a simplified circuit diagram of a power receiving module for a charging system according to one embodiment of the invention; and
FIG. 4 is a simplified circuit diagram of the power module of FIG. 3 in more detail.

### DETAILED DESCRIPTION OF AN EXAMPLE EMBODIMENT

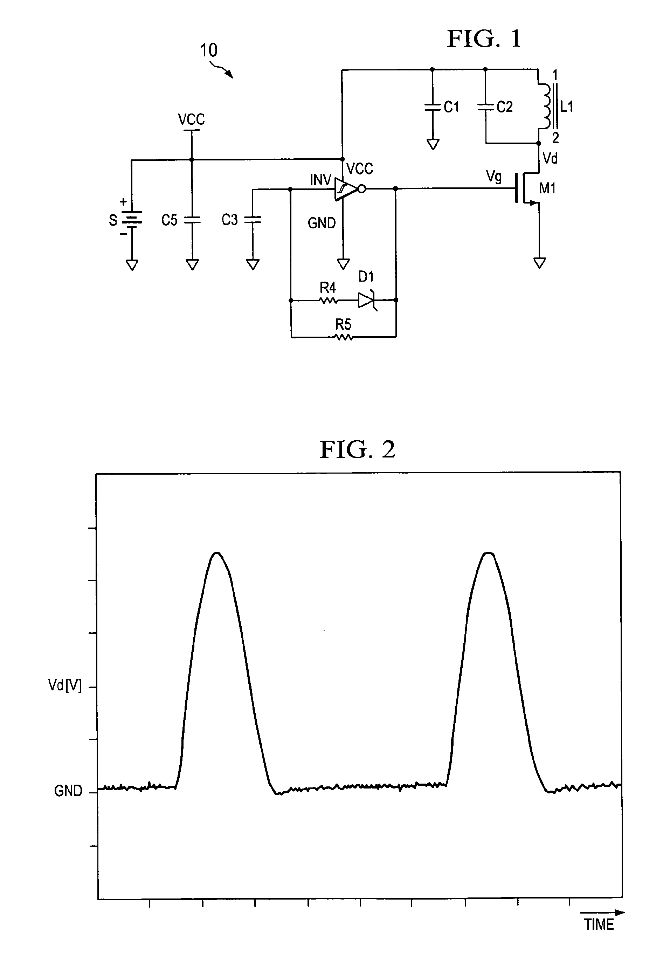

As an illustrative example only, FIG. 1 shows a simplified circuit diagram of a power generating module 10, which is part of a charging system according to an embodiment of the invention. A power supply S, which can be a USB or main power supply, for example, provides a positive supply voltage to a voltage rail VCC, for example at a voltage of 5 V. A capacitor C5 is coupled between the voltage rail VCC and ground. An inverter INV, for example a Schmitt trigger inverter, has an input, an output and two control inputs. The inverter INV is coupled between the rail VCC and ground at its control inputs. Another input of the inverter INV is coupled to one side of a capacitor C3, the other side of which is coupled to ground, and the output of the inverter INV is coupled to a node Vg at the gate of an NMOS transistor M1. The transistor M1 simply forms a switch and could be replaced by any other suitable switching component or circuitry. Coupled in parallel with the inverter INV between its input and output is a series arrangement of a resistor R4 and a Schottky diode D1 forward biased in a direction from the input to the output of the inverter INV. Another resistor R5 is further coupled in parallel with the series arrangement of the resistor R4 and the diode D1. The drain terminal of the transistor M1 is coupled to a node Vd and a resonance circuit formed of a parallel arrangement of an inductor L1 and a capacitor C2 is coupled between the node Vd and the supply voltage rail VCC. A further capacitor C1 is coupled between the supply voltage rail VCC and ground.

In operation, a pulse width modulated (PWM) square wave is generated at the output of the inverter INV by means of the inverter INV and the arrangement of the resistor R4 and diode D1, the resistor R5 and the capacitor C3. For example, when the capacitance of the capacitor C3 is 150 pF and the resistances of the resistors R4 and R4 are 3.9 kΩ and 15kΩ, respectively, for a supply voltage at the rail VCC of 5V, a 2.2MHz PWM square wave signal is generated with a 48% duty cycle voltage on the node Vg (the gate terminal of the transistor M1). The PWM square wave signal is used to switch the transistor M1 ON and OFF in a flyback-controlled manner. During the time when the node Vg is HIGH, the transistor M1 is closed (switched ON) and the supply voltage from the supply rail VCC is applied to the inductor L1. In this way, energy is then stored in the inductor L1. When the node Vg is LOW, the transistor M1 is opened (switched OFF) and a half-sine wave resonant voltage, generated by the resonant circuit formed from the inductor L1 and the capacitor C2, is present on the drain terminal of the transistor M1 at the node Vd. An example of a waveform of Vd is shown in FIG. 2. In this way, the voltage on the drain terminal of the transistor M1 starts at zero. After one cycle of the half-wave oscillation is complete, the node Vg goes HIGH again, the transistor M1 is closed (switched ON) and the next cycle is started. Therefore the transistor M1 is switched at zero voltage with zero voltage on the node Vd (at the drain terminal of the transistor M1). This circuit forms a resonant flyback converter configuration and, due to this configuration, almost no electromagnetic interference (EMI) is radiated, since there are no current spikes (di/dt spikes).

In an advantageous embodiment, a system for charging a mobile electronic device may have a plurality of power generating modules 10. The inductors may be arranged in various different directions and orientations and the mobile device may be placed arbitrarily on the power generating module or modules 10. The inductors may be arranged in a pad or in another arrangement with a flat surface on which the mobile device may be placed. Various new configurations and arrangements for a charging systems are possible, as the power generating concept according to the invention can be small and simple.

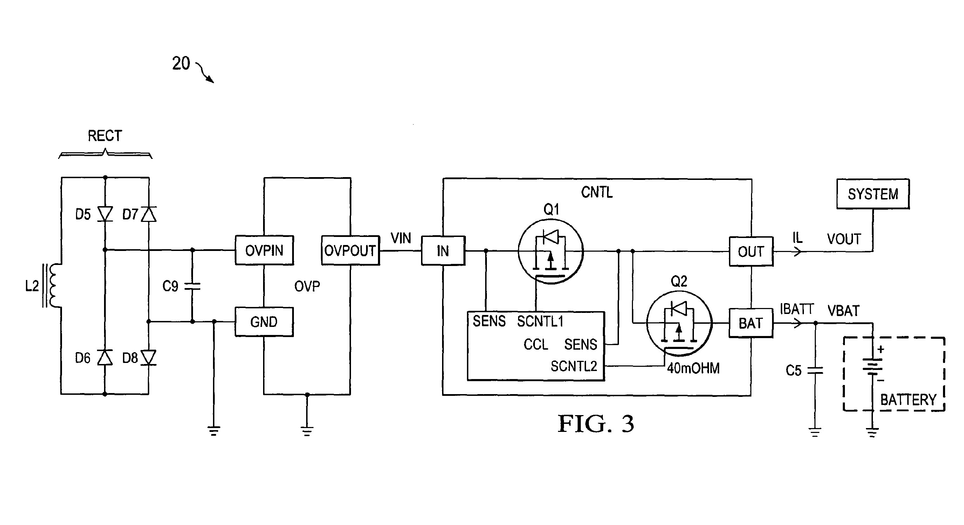

FIG. 3 shows a simplified circuit diagram of a power receiving module 20 according to the invention. The power receiving module 20 may be implemented as circuitry provided inside a mobile electronic device, for example a mobile phone. In the power receiving module 20, an inductor L2 is coupled with input pin OVPIN to an overvoltage protection stage OVP, optionally via a rectification circuit RECT. The overvoltage protection stage OVP could be implemented as a overvoltage and/or overcurrent protection integrated circuit (IC) (for example the BQ24300TDFN manufactured by Texas Instruments). The rectification circuit RECT may include two series arrangements of diode pairs D5, D7 and D6, D8 coupled in parallel with each other, and a capacitor C9 coupled in parallel with both diode pairs D5, D7 and D6, D8.

The overvoltage protection stage OVP is coupled with pin OVPOUT to a control stage CNTL. The control stage CNTL can be implemented by a charge and power management IC. An output of the control stage CNTL provides an output voltage rail VOUT. A load SYSTEM, for example the circuitry necessary for operation of the mobile electronic device, may be coupled to the output voltage rail VOUT.

Based on the power requirements of the load, the voltage rail VOUT will be maintained above a set predetermined voltage level, as will be explained below. The battery is coupled to the output voltage rail VOUT, via charging circuitry, so that the battery may provide the output voltage for powering the load, and is also coupled to an input of the control stage CNTL.

If the inductor L2 in the power receiving module 20 is close to the inductor L1 in the power generating module 10, the inductors L1 and L2 will be coupled in a flyback transformer configuration and the energy stored in the inductor L1 is transferred to the inductor L2 during the OFF time of the signal at the node Vg. The rectification circuit RECT performs a full wave rectification, which allows L1 and L2 to be placed relative to each other in any configuration and power will still be received by L2 from L1. No forward current is coupled because the forward voltage is always less than the flyback voltage. Therefore energy can be stored in the air gap between the two inductors L1 and L2. Energy will be transmitted from the inductor L1 to the inductor L2 independently of the orientation between the inductors L1 and L2. The over voltage protection stage OVP can act like a linear regulator and optionally provide an overvoltage and overcurrent protection if an external high flux leakage were to generate current spikes. Alternatively, the overvoltage protection stage OVP could be replaced by circuitry having a conversion topology used similarly to a buck converter. In this way the total efficiency of the system can be increased. Both the rectification circuit RECT and the overvoltage protection stage OVP are optional advantageous features and the power receiving module 20 may also operate without these two features.

In an embodiment, the control stage CNTL may include two transistors Q1 and Q2 (Q2 may have very low ON resistance of 40 mOhm) for controlling the output voltage VOUT and the battery voltage VBAT (e.g. charging procedure). A control mechanism CCL may monitor the voltages and/or currents on pin OUT (with input SENS on CCL), and optionally also at IN and BAT and control transistors Q1 and Q2 to regulate the battery charging current Ibatt such that the supply voltage VOUT is maintained above a predetermined level.

The control stage CNTL monitors the total power transferred from L1 to L2. If the power received by L2 from L1 is not sufficient to generate a load current IL to keep the voltage at the output rail VOUT above the predetermined level, the control stage CNTL (for example with the internal control mechanism CCL) controls the battery to provide the power required to increase the voltage at the rail VOUT to above the set predetermined level. This may be done with control signal SCNTL2 on transistor Q2. On the other hand, if the power received by L2 from L1 is greater than that required to keep the output voltage at VOUT above the predetermined level, the control stage CNTL feeds the additional energy from the inductor L2 (the energy received by L2 over and above that required to power the load SYSTEM at a load current IL to keep VOUT above the predetermined level) to the charging circuitry to charge the battery. In this way, the battery may be dynamically charged.

Using a control stage CNTL with the above features provides in particular that very simple and efficient circuitry and configuration for contactless charging can be used. An embodiment of a power generating module 10 is shown in FIG. 1.

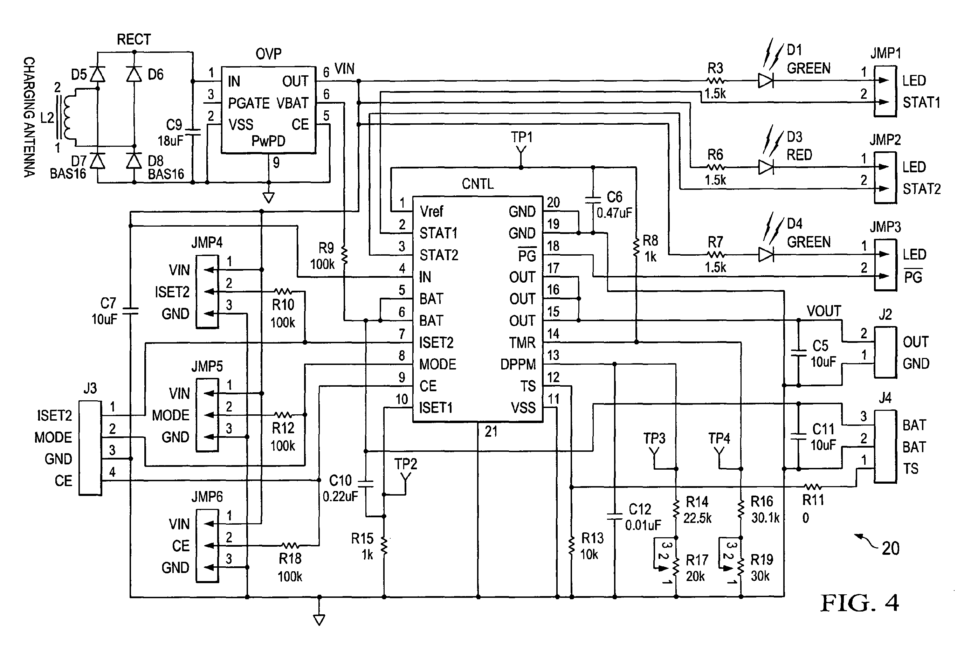

Fig. 4 shows the embodiment of FIG. 3 in more detail. The main parts of the circuit are similar to FIG. 3 and the functionality may basically be the same. The charge and power management IC, which can be used as the control stage CNTL, may be a BQ24070RHL or BQ24071 RHL power management IC manufactured by Texas Instruments. The power management IC CNTL is advantageously adapted to power the system while independently charging the battery. The pins shown on stage CNTL in FIG. 3 have the following functions and meaning. IN is the input pin for the supply voltage, P̅G̅ is a power good status output pin (open-drain), BAT is a battery input and output pin, CE is the chip enable input (active high), the DPPM chip is a dynamic power-path management set point, ISET1 is an input output pin for a charge current set point and precharge and termination set point, ISET2 is an input pin for a charge current set point for a USB port. The output pin OUT is the output terminal to the system. The MODE pin is a power source selection input (low for USB mode current limit), the STAT1 pin is a charge status output 1 (open-drain) and STAT2 is a charge status output 2 (open-drain). TMR is a timer program input programmed by a resistor, TS is a temperature sense input, VREF is an internal reference signal and GND and VSS are ground connections.

The power management IC CNTL monitors the output voltage (system voltage) for input power loss. If the voltage on the OUT pin drops to a preset value, due to a limited amount of input current, then the battery charging current may be reduced until the output voltage stops dropping. The power management control of control stage CNTL tries to reach a steady-state condition where the system gets its needed current and the battery is charged with the remaining current. No active control limits the current to the system. Therefore, if the system demands more current than the input can provide, the output voltage drops just below the battery voltage and transistor Q2 (shown in FIG. 3) turns on which supplements the input current to the system. The main advantage of using the power management control as described above, resides in the possibility to use a simple power generating module 10 as shown in FIG.1.

Connection J4 can be coupled to a battery, to be charged if sufficient power is provided through charging antenna L2. The other connection J2 provides the output voltage VOUT to the system. The open-drain STAT1 and STAT2 outputs indicate various charging operations. These status pins can be used to drive LEDs as shown for example with LEDs D1 and D3. Jumpers JMP1 and JMP2 can be provided to couple the status bits to the output pin of the overvoltage protection stage OVP by providing enough current for driving the LEDs if a specific status is reached. The states are for example: precharge in progress, fast charge in progress or charge done or charge suspended due to temperature, timer fault or sleep mode. The open-drain pin P̅G̅ indicates when input power is present and above the battery voltage. The corresponding output turns ON an exiting sleep mode (input voltage above battery voltage). This output is turned OFF in the sleep mode (open-drain). In the present embodiment, pin P̅G̅ is also coupled to an LED D4 powered by output pin OUT of overvoltage protection circuit OVP if a respective jumper JMP3 is set. Jumpers JMP4, JMP5 and JMP6 can be used to set different modes of the control stage through pins ISET2, MODE and CE. The CE digital input is used to disable or enable the integrated circuit. The power management IC CNTL monitors the voltage on the ISET1 pin during voltage regulation to determine whether the termination should occur. Once the termination threshold is detected, the control stage CNTL terminates charge. ISET1 is also used to determine the precharge rate and the battery charge current.

Although the invention has been described hereinabove with reference to a specific embodiment, it is not limited to this embodiment and no doubt further alternatives will occur to the skilled person that lie within the scope of the invention as claimed.

## Claims

1. A mobile electronic device including circuitry for contactless charging, the circuitry comprising:
an inductor for contactlessly receiving power and supplying the power to a load; and
a control stage coupled to the inductor,
wherein the control stage is adapted to control a supply of power received by the inductor to the load and to regulate a load current such that a supply voltage is maintained above a predetermined level.

2. The electronic device according to claim 1, further comprising a battery coupled to the control stage, the control stage being adapted to control the battery to supply power to the load when the load requires more power than the inductor can supply.

3. The electronic device according to claim 2, wherein the control stage is further adapted to control a supply of power received by the inductor to dynamically charge the battery when the inductor is supplying more power than is required by the load.

4. The electronic device according to claim 1 or claim 2, further comprising a rectification stage coupled between the inductor and the control stage for rectifying a voltage signal from the inductor to be supplied to the load.

5. A charging system for contactlessly charging a mobile electronic device, the system comprising:
a power generating module including
a first inductor for transmitting power,
a capacitor coupled to the first inductor in a resonant configuration, and
a switch for coupling the first inductor and the capacitor to a power supply; and
a power receiving module including circuitry for charging the mobile electronic device, the circuitry comprising
a second inductor for contactlessly receiving power from the first inductor and adapted to supply the received power to a load, and
a control stage coupled to the inductor,
wherein the switch is implemented by a MOSFET coupled in a flyback-controlled configuration and is adapted to be switched when a drain voltage of the MOSFET is zero, and the control stage is adapted to control a supply of power received by the second inductor to the mobile electronic device to regulate a load current such that a supply voltage is maintained above a predetermined level.

6. A method of contactlessly supplying power to a load, the method comprising:
contactlessly receiving power; and
supplying the received power to the load,
wherein the method further comprises controlling a supply of power to the load so as to regulate a load current such that a supply voltage is maintained above a predetermined level.
